(19) Europäisches Patentamt
European Patent Office
Office européen des brevets

(11) EP 3 208 293 A1

(12) **EUROPEAN PATENT APPLICATION**

(43) Date of publication:
**23.08.2017 Bulletin 2017/34**

(21) Application number: **16156197.2**

(22) Date of filing: **17.02.2016**

(51) Int Cl.:
***C08G 65/26*** *(2006.01)* ***C11D 3/37*** *(2006.01)*
***C08G 65/332*** *(2006.01)* ***C08G 65/334*** *(2006.01)*
***C08G 65/335*** *(2006.01)* ***C08G 65/337*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Clariant International Ltd**
**4132 Muttenz (CH)**

(72) Inventor: **The designation of the inventor has not yet been filed**

(74) Representative: **Paczkowski, Marcus**
**Clariant Produkte (Deutschland) GmbH**
**Patent & License Management Chemicals**
**Industriepark Höchst / G 860**
**65926 Frankfurt am Main (DE)**

(54) **ALKOXYLATED PHENOL DERIVATIVES**

(57) Alkoxylates are described that are obtainable by (i) in a first step reacting
a) one or more compounds selected from the group consisting of phenols that are substituted with one substituent, wherein the one substituent is in the ortho-, meta- or para-position to the OH group of the phenol and is selected from the group consisting of OH, R8, OR8, F, Cl, Br, I, CN, $NO_2$ or COOR9, wherein R8 is a linear or branched alkyl group with 1 to 4 C-atoms and R9 is a linear or branched alkyl group comprising 1 to 22 C-atoms or a linear or branched mono- or polyunsaturated alkenyl group comprising 2 to 22 C-atoms with
b) an aryl-substituted linear or branched $C_1$-$C_3$ alkyl alcohol or an aryl-substituted linear or branched $C_2$- or $C_3$-alkene, and
(ii) in a second step alkoxylating the reaction product of the first step and
(iii) in an optional third step reacting the reaction product of step (ii) with an alkylating agent providing a $C_1$-$C_4$ alkyl group, with a carboxymethylating agent, with a sulfating agent, with a phosphating agent or with a sulfosuccinating agent.

These alkoxylates may advantageously be used as anti-redeposition agents in laundry applications.

EP 3 208 293 A1

## Description

The present invention concerns the field of alkoxylated phenol derivatives. These inventive compounds may advantageously be used as anti-redeposition agents in washing applications.

Anti-redeposition agents used in laundry detergents help to prevent soil from resettling on a fabric after it has been removed during washing. This can for example be achieved by dispersing the soil in the washing liquor.

The washing of soiled fabrics with a laundry detergent composition is essentially a two-step process. In the first stage the detergent must remove the soil from the fabric and suspend it in the washing liquor. In the second stage the detergent composition must prevent the soil and other insoluble materials from re-depositing on the cloth before the fabric is removed from the washing liquor or the rinse liquor. Polymers are known to aid both processes. For example, soil release polymers enhance soil removal from the fabric whilst anti-redeposition polymers prevent the removed soil from re-depositing on the fabric.

Examples of suitable anti-redeposition agents include fatty acid amides, fluorocarbon surfactants, complex phosphate esters, styrene maleic anhydride copolymers, and cellulosic derivatives such as hydroxyethyl cellulose, hydroxypropyl cellulose, and the like.

US 4,240,918 e.g. describes polymers having anti-soiling and anti-redeposition properties, for example hydrophilic polyurethanes, certain copolyesters and mixtures thereof.

However, many of the known anti-redeposition agents possess the disadvantage that their performance and whitening effect in washing or laundry applications are insufficient.

Therefore, the problem to be solved by the present invention is to provide new anti-redeposition agents that have favourable performance and lead to enhanced "whiteness" when used in washing or laundry applications.

Surprisingly it has been found that this problem can be solved by alkoxylates obtainable by

(i) in a first step reacting

a) one or more compounds selected from the group consisting of phenols that are substituted with one substituent, wherein the one substituent is in the ortho-, meta- or para-position to the OH group of the phenol and is selected from the group consisting of OH, R8, OR8, F, Cl, Br, I, CN, $NO_2$ or COOR9, wherein R8 is a linear or branched alkyl group with 1 to 4 C-atoms and R9 is a linear or branched alkyl group comprising 1 to 22 C-atoms or a linear or branched mono- or polyunsaturated alkenyl group comprising 2 to 22 C-atoms, preferably R9 is a linear or branched alkyl group comprising 1 to 18 C-atoms or a linear or branched mono- or polyunsaturated alkenyl group comprising 2 to 18 C-atoms and more preferably R9 is a linear or branched alkyl group comprising 1 to 4 carbon atoms, and preferably the one substituent is selected from the group consisting of OH, $CH_3$, $C_2H_5$, $OCH_3$, $OC_2H_5$, Cl, CN, $NO_2$ or COOR9, more preferably is selected from the group consisting of OH, $CH_3$, $OCH_3$, Cl, CN and COOR9, even more preferably is selected from the group consisting of OH, $CH_3$, $OCH_3$ and COOR9, particularly preferably is OH or $OCH_3$ and extraordinarily preferably is $OCH_3$, with

b) an aryl-substituted linear or branched $C_1$-$C_3$ alkyl alcohol or an aryl-substituted linear or branched $C_2$- or $C_3$-alkene, preferably an aryl-substituted linear or branched $C_2$- or $C_3$-alkene, more preferably styrene or alpha-methylstyrene and even more preferably styrene, and

(ii) in a second step alkoxylating the reaction product of the first step and

(iii) in an optional third step reacting the reaction product of step (ii) with an alkylating agent providing a $C_1$-$C_4$ alkyl group, with a carboxymethylating agent, with a sulfating agent, with a phosphating agent or with a sulfosuccinating agent.

Therefore, the subject matter of the present invention is alkoxylates obtainable by

(i) in a first step reacting

a) one or more compounds selected from the group consisting of phenols that are substituted with one substituent, wherein the one substituent is in the ortho-, meta- or para-position to the OH group of the phenol and is selected from the group consisting of OH, R8, OR8, F, Cl, Br, I, CN, $NO_2$ or COOR9, wherein R8 is a linear or branched alkyl group with 1 to 4 C-atoms and R9 is a linear or branched alkyl group comprising 1 to 22 C-atoms or a linear or branched mono- or polyunsaturated alkenyl group comprising 2 to 22 C-atoms, preferably R9 is a linear or branched alkyl group comprising 1 to 18 C-atoms or a linear or branched mono- or polyunsaturated alkenyl group comprising 2 to 18 C-atoms and more preferably R9 is a linear or branched alkyl group comprising 1 to 4 carbon atoms, and preferably the one substituent is selected from the group consisting of OH, $CH_3$, $C_2H_5$, $OCH_3$, $OC_2H_5$, Cl, CN, $NO_2$ or COOR9, more preferably is selected from the group consisting of OH, $CH_3$,

$OCH_3$, Cl, CN and COOR9, even more preferably is selected from the group consisting of OH, $CH_3$, $OCH_3$ and COOR9, particularly preferably is OH or $OCH_3$ and extraordinarily preferably is $OCH_3$, with

b) an aryl-substituted linear or branched $C_1$-$C_3$ alkyl alcohol or an aryl-substituted linear or branched $C_2$- or $C_3$-alkene, preferably an aryl-substituted linear or branched $C_2$- or $C_3$-alkene, more preferably styrene or alpha-methylstyrene and even more preferably styrene, and

(ii) in a second step alkoxylating the reaction product of the first step and

(iii) in an optional third step reacting the reaction product of step (ii) with an alkylating agent providing a $C_1$-$C_4$ alkyl group, with a carboxymethylating agent, with a sulfating agent, with a phosphating agent or with a sulfosuccinating agent.

Suitable alkylating agents providing $C_1$-$C_4$ alkyl groups are e.g. dialkylsulfates with $C_1$-$C_4$ alkyl groups and preferably dimethylsulfate, $C_1$-$C_4$ alkylhalogenides, preferably $C_1$-$C_4$ alkylchlorides, -bromides or -iodides and more preferably $C_1$-$C_4$ alkylchlorides, $C_1$-$C_4$ alkyltosylates or $C_1$-$C_4$ alkylmesylates.

Suitable carboxymethylating agents are e.g. chloroacetic acid, bromoacetic acid, iodoacetic acid or their salts and preferably chloroacetic acid.

Suitable sulfating agents are e.g. $SO_3$ or amidosulfonic acid.

Suitable phosphating agents are e.g. polyphosphoric acid, phosphorous oxides such as $P_2O_5$, $PCl_3$ in combination with an oxidation reaction and $PCl_5$ or $POCl_3$ in combination with a hydrolysis.

Suitable sulfosuccinating agents are e.g. maleic anhydride in combination with sulfite.

Reactions of a compound comprising an OH group with an alkylating agent providing a $C_1$-$C_4$ alkyl group, with a carboxymethylating agent, with a sulfating agent, with a phosphating agent or with a sulfosuccinating agent are already known. Reactions of this kind are e.g. described in WO 2008/138486 A1.

The inventive alkoxylates exhibit favourable performance as anti-redeposition agents in washing or laundry applications. They exhibit favourable performance as dispersants and in washing or laundry applications they lead to enhanced "whiteness". Furthermore, the inventive alkoxylates exhibit favourable stability and in particular favourable hydrolytic stability. Inventive alkoxylates furthermore enhance stain removal and lead to enhanced cleaning. Preferably, inventive alkoxylates furthermore exhibit favourable biodegradability.

In step (i) an "aryl-substituted linear or branched $C_1$-$C_3$ alkyl alcohol" or an "aryl-substituted linear or branched $C_2$- or $C_3$-alkene" is reacted.

The "aryl-substituted linear or branched $C_1$ to $C_3$ alkyl alcohol" denotes a linear or branched $C_1$ to $C_3$ alkyl alcohol which is substituted by an aryl group. The aryl group in these reactants preferably comprises 6 to 10 carbon atoms. More preferably, the "aryl-substituted linear or branched $C_1$ to $C_3$ alkyl alcohol" is benzyl alcohol.

The "aryl-substituted linear or branched $C_2$- or $C_3$-alkene" denotes a linear or branched $C_2$- or $C_3$-alkene which is substituted by an aryl group. The aryl group in these reactants preferably comprises 6 to 10 carbon atoms. More preferably, the "aryl-substituted linear or branched $C_2$- or $C_3$-alkene" is styrene or alpha-methylstyrene and even more preferably is styrene.

Tristyrylphenol ethoxylates are known compounds that are for example described in US 2008/0255204 A1 or WO 99/40784 A1.

Tristyrylphenol ethoxylates comprising compounds of the following structure (II)

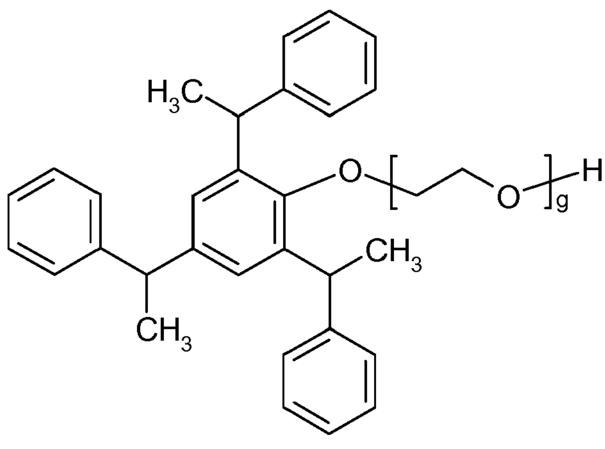

(II)

are commercially available from different sources, e.g. Clariant. Examples for products are Emulsogen® TS 160 (g = 16, meaning a molecular average of 16 mol EO per mol of phenol, "EO" meaning ethylene oxide) and Emulsogen® TS

540 (g = 54, meaning a molecular average of 54 mol EO per mol of phenol).

Ethoxylated and styrenated phenol derivatives are for example also described in US 2003/0196685 A1.

Preferably, the inventive alkoxylates are obtainable in that the molar ratio of the aryl-substituted linear or branched $C_1$-$C_3$ alkyl alcohols or the aryl-substituted linear or branched $C_2$- or $C_3$-alkenes mentioned under b) of the first step, preferably the aryl-substituted linear or branched $C_2$- or $C_3$-alkenes, more preferably styrene or alpha-methylstyrene and even more preferably styrene, to the one or more compounds selected from the group consisting of the substituted phenols mentioned under a) of the first step is of from 1 : 1 to 3 : 1, preferably of from 2 : 1 to 3 : 1 and more preferably is 2 : 1.

Furthermore preferably, the inventive alkoxylates are obtainable in that the molar ratio of alkoxylation agent to the one or more compounds selected from the group consisting of the substituted phenols mentioned under a) of the first step is of from 5 : 1 to 100 : 1, preferably of from 7 : 1 to 80 : 1, more preferably of from 8 : 1 to 70 : 1, even more preferably of from 9 : 1 to 60 : 1 and particularly preferably of from 10 : 1 to 35 : 1.

Furthermore preferably, the inventive alkoxylates are obtainable in that the one or more compounds selected from the group consisting of the substituted phenols mentioned under a) of the first step are selected from the group consisting of ortho-dihydroxybenzene, meta-dihydroxybenzene, para-dihydroxybenzene, ortho-methoxyphenol, meta-methoxyphenol and para-methoxyphenol, more preferably are selected from the group consisting of ortho-methoxyphenol and para-methoxyphenol and even more preferably the compound is para-methoxyphenol.

Furthermore preferably, the inventive alkoxylates are obtainable in that the alkoxylation of the second step is an ethoxylation or a combination of both an ethoxylation and a propoxylation and preferably an ethoxylation.

More preferably, the inventive alkoxylates are obtainable in that the alkoxylation of the second step is a reaction with ethylene oxide or with ethylene oxide and propylene oxide, in this case preferably with more ethylene oxide than propylene oxide and in this case furthermore preferably either simultaneously or successively, and particularly preferably the alkoxylation of the second step is a reaction with only ethylene oxide.

Preferably, the inventive alkoxylates are obtainable in that both steps (i) and (ii) are performed in the presence of a catalyst.

More preferably, the inventive alkoxylates are obtainable in that the catalyst of step (i) is an acid, preferably a Broensted acid and the catalyst of step (ii) is a base or a double metal cyanide catalyst, preferably a base selected from the group consisting of alkali methoxide or alkali hydroxide, more preferably selected from the group consisting of NaOH, KOH, $NaOCH_3$ and $KOCH_3$, even more preferably selected from the group consisting of $NaOCH_3$ and $KOCH_3$ and particularly preferably $NaOCH_3$.

Preferably, the inventive alkoxylates are obtainable in that the reactions of steps (i) and (ii) are performed in the absence of solvent.

Furthermore preferably, the inventive alkoxylates are obtainable in that the reaction of step (i) is performed at a temperature of from 100 to 180 °C and preferably of from 120 to 150 °C and the reaction of step (ii) is performed at a temperature of from 75 to 220 °C, preferably of from 100 to 200 °C and more preferably of from 130 to 150 °C.

Furthermore preferably, the inventive alkoxylates are obtainable in that the reaction of step (i) is performed at ambient pressure and the reaction of step (ii) is performed at a pressure of from 1 to 100 bar and preferably of from 2 to 10 bar.

In one preferred embodiment of the invention the inventive alkoxylates are obtainable by not performing step (iii).

In another preferred embodiment of the invention the inventive alkoxylates are obtainable by performing step (iii).

In a particularly preferred embodiment of the invention, the inventive alkoxylates are obtainable by

(i) in a first step reacting

a) one or more compounds selected from the group consisting of ortho-dihydroxybenzene, meta-dihydroxybenzene, para-dihydroxybenzene, ortho-methoxyphenol, meta-methoxyphenol and para-methoxyphenol, preferably selected from the group consisting of ortho-methoxyphenol and para-methoxyphenol and more preferably para-methoxyphenol, with

b) styrene and

(ii) in a second step alkoxylating the reaction product of the first step, preferably reacting the reaction product of the first step with ethylene oxide or with ethylene oxide and propylene oxide, in this case preferably with more ethylene oxide than propylene oxide and in this case furthermore preferably either simultaneously or successively, and more preferably the alkoxylation of the second step is a reaction with only ethylene oxide.

A subject matter of the invention solving the problem posed is also alkoxylates according to the following formula (I)

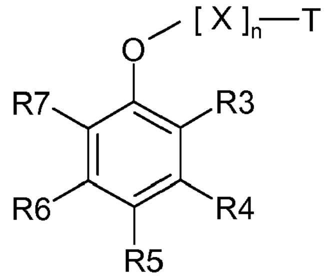

(I)

wherein

X is selected from ethoxy and mixtures of ethoxy and propoxy groups, preferably is selected from ethoxy and mixtures of ethoxy and propoxy groups where the number of ethoxy groups in the mixtures is greater than the number of propoxy groups and more preferably X is ethoxy,

T is selected from the group consisting of H, $C_1$-$C_4$ alkyl, $SO_3^-$, $CH_2$-$COO^-$, sulfosuccinate and $PO_3^{2-}$, preferably is selected from the group consisting of H and $CH_3$ and more preferably is H,

R3-R7 are independently of one another H, Y, aryl, aryl-substituted linear or branched $C_1$ to $C_3$ alkyl or $O(Z)_mT_1$, preferably H, Y, aryl-substituted linear or branched $C_1$ to $C_3$ alkyl or $O(Z)_mT_1$, the aryl-substituted linear or branched $C_1$ to $C_3$ alkyl preferably is selected from the group consisting of $C_6H_5CHCH_3$ and $C_6H_5C(CH_3)_2$ and more preferably the aryl-substituted linear or branched $C_1$ to $C_3$ alkyl is $C_6H_5CHCH_3$,

Y is R8, OR8, F, Cl, Br, I, CN, $NO_2$ or COOR9, wherein R8 is a linear or branched alkyl group with 1 to 4 C-atoms and R9 is a linear or branched alkyl group comprising 1 to 22 C-atoms or a linear or branched mono- or polyunsaturated alkenyl group comprising 2 to 22 C-atoms, preferably R9 is a linear or branched alkyl group comprising 1 to 18 C-atoms or a linear or branched mono- or polyunsaturated alkenyl group comprising 2 to 18 C-atoms and more preferably R9 is a linear or branched alkyl group comprising 1 to 4 carbon atoms, and preferably Y is $CH_3$, $C_2H_5$, $OCH_3$, $OC_2H_5$, Cl, CN, $NO_2$ or COOR9, more preferably $CH_3$, $OCH_3$, Cl, CN or COOR9, even more preferably $CH_3$, $OCH_3$ or COOR9 and particularly preferably $OCH_3$,

Z is selected from ethoxy and mixtures of ethoxy and propoxy groups, preferably ethoxy and mixtures of ethoxy and propoxy groups where the number of ethoxy groups in the mixtures is greater than the number of propoxy groups and more preferably Z is ethoxy,

$T_1$ is selected from the group consisting of H, $C_1$-$C_4$ alkyl, $SO_3^-$, $CH_2$-$COO^-$, sulfosuccinate and $PO_3^{2-}$, preferably is selected from the group consisting of H and $CH_3$ and more preferably is H,

n + m on a molar average is a number of from 5 to 100, preferably of from 7 to 80, more preferably of from 8 to 70, even more preferably of from 9 to 60 and particularly preferably of from 10 to 35,

characterised in that exactly one of the substituents R3-R7 is $O(Z)_mT_1$ or Y, preferably Y, and one to three, preferably two or three of the other substituents R3-R7 are aryl or aryl-substituted linear or branched $C_1$ to $C_3$ alkyl, preferably aryl-substituted linear or branched $C_1$ to $C_3$ alkyl, more preferably selected from the group consisting of $C_6H_5CHCH_3$ and $C_6H_5C(CH_3)_2$ and even more preferably $C_6H_5CHCH_3$.

In a preferred embodiment of the invention, inventive alkoxylates according to formula (I) are obtainable by performing the above-mentioned steps (i) and (ii) and optionally also the above-mentioned step (iii).

In the inventive alkoxylates according to formula (I) exactly one of the substituents R3-R7 is "$O(Z)_mT_1$" or "Y". This e.g. means that in the inventive alkoxylates according to formula (I) none of the substituents R3-R7 can have the meaning "$O(Z)_mT_1$" in case one of these substituents is "Y" and none of the substituents R3-R7 can have the meaning "Y" in case one of these substituents is "$O(Z)_mT_1$".

In case T and/or $T_1$ are selected from the group consisting of $SO_3^-$, $CH_2$-$COO^-$, sulfosuccinate and $PO_3^{2-}$ the inventive alkoxylates comprise a counter cation. This counter cation is preferably selected from the group consisting of alkali metal ions, alkaline earth metal ions and $NH_4^+$, more preferably from the group consisting of $Na^+$ and $NH_4^+$.

In formula (I), the substituents R3-R7 may have the meaning "aryl". Preferably, the substituent "aryl" comprises 6 to 10 carbon atoms and more preferably, the substituent "aryl" is phenyl.

In formula (I), the substituent "aryl-substituted linear or branched $C_1$ to $C_3$ alkyl" denotes a linear or branched $C_1$ to $C_3$ alkyl group which is substituted by an aryl group. The "aryl" preferably comprises 6 to 10 carbon atoms. More preferably, the substituent "aryl-substituted linear or branched $C_1$ to $C_3$ alkyl" is selected from the group consisting of $C_6H_5CHCH_3$ and $C_6H_5C(CH_3)_2$ and even more preferably is $C_6H_5CHCH_3$.

Preferably, the inventive alkoxylates are selected from the compounds according to formula (I) wherein

X is selected from ethoxy and mixtures of ethoxy and propoxy groups, preferably is selected from ethoxy and

mixtures of ethoxy and propoxy groups where the number of ethoxy groups in the mixtures is greater than the number of propoxy groups and more preferably X is ethoxy,

T is H,

R3-R7 are independently of one another H, $OCH_3$, $C_6H_5CHCH_3$ or $O(Z)_mH$,

Z is selected from ethoxy and mixtures of ethoxy and propoxy groups, preferably ethoxy and mixtures of ethoxy and propoxy groups where the number of ethoxy groups in the mixtures is greater than the number of propoxy groups and more preferably Z is ethoxy,

n + m on a molar average is a number of from 5 to 100, preferably of from 7 to 80, more preferably of from 8 to 70, even more preferably of from 9 to 60 and particularly preferably of from 10 to 35,

characterised in that exactly one of the substituents R3-R7 is $O(Z)_mH$ or $OCH_3$, preferably $OCH_3$, and one to three of the other substituents R3-R7 are $C_6H_5CHCH_3$ and preferably two or three of the other substituents R3-R7 are $C_6H_5CHCH_3$.

The substituent "$C_6H_5CHCH_3$" has the structure

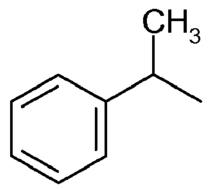

the substituent "$C_6H_5C(CH_3)_2$" has the structure

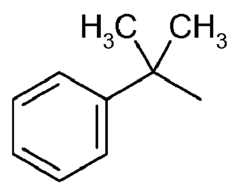

"sulfosuccinate" has the structure

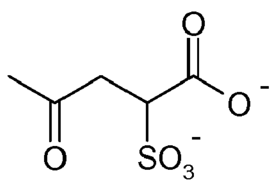

and/or

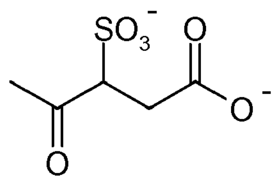

"ethoxy" or "ethyleneoxy" has the structure

$-CH_2CH_2O-$

and

"propoxy" or "propyleneoxy" has the structure

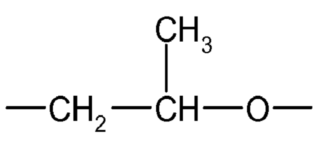

and/or

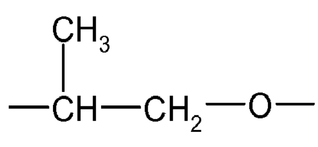

In a preferred embodiment of the invention the sum "n + m" in the inventive alkoxylates according to formula (I), on a molar average, is 14, 15, 16, 17, 18, 19, 20, 21, 22, 23, 24, 25, 26, 27, 28, 29, 30, 31 or 32.

In the inventive alkoxylates according to formula (I) the sum "n + m", on a molar average, is a number of from 5 to 100, preferably of from 7 to 80, more preferably of from 8 to 70, even more preferably of from 9 to 60 and particularly preferably of from 10 to 35 and n and m, on a molar average and independently of one another, preferably are numbers

of from 0 to 100, more preferably of from 0 to 80, even more preferably of from 0 to 70, particularly preferably of from 0 to 60 and extraordinarily preferably of from 0 to 35.

In one preferred embodiment of the invention one of the substituents R3-R7 in the inventive alkoxylates according to formula (I) is Y and more preferably $OCH_3$. Therefore, in the inventive alkoxylates according to formula (I) of this preferred embodiment of the invention none of the substituents R3-R7 can have the meaning $O(Z)_mT_1$. In this preferred embodiment of the invention n, on a molar average, is a number of from 5 to 100, preferably of from 7 to 80, more preferably of from 8 to 70, even more preferably of from 9 to 60 and particularly preferably of from 10 to 35.

In another preferred embodiment of the invention one of the substituents R3-R7 in the inventive alkoxylates according to formula (I) is $O(Z)_mT_1$ and more preferably $O(Z)_mH$. Therefore, in the inventive alkoxylates according to formula (I) of this preferred embodiment of the invention none of the substituents R3-R7 can have the meaning Y. In this preferred embodiment of the invention n and m, on a molar average and independently of one another, preferably are numbers of from 1 to 75, more preferably of from 2 to 60, even more preferably of from 3 to 50, particularly preferably of from 4 to 40 and extraordinarily preferably of from 5 to 25.

In another preferred embodiment of the invention two of the substituents R3-R7 in the inventive alkoxylates according to formula (I) are aryl or aryl-substituted linear or branched $C_1$ to $C_3$ alkyl, preferably aryl-substituted linear or branched $C_1$ to $C_3$ alkyl, more preferably selected from the group consisting of $C_6H_5CHCH_3$ and $C_6H_5C(CH_3)_2$ and even more preferably $C_6H_5CHCH_3$, and more preferably these two substituents are in the ortho-positions to the group $O-[X]_n-T$.

In a particularly preferred embodiment of the invention in the inventive alkoxylates according to formula (I) X is ethoxy, T is H, R4 is $O(Z)_mH$, Z is ethoxy, n + m, on a molar average, is a number of from 5 to 35, one of the substituents R3, R5, R6 and R7 is H and the other three of these substituents are $C_6H_5CHCH_3$, and preferably, n and m, on a molar average and independently of one another, are numbers of from 2 to 20.

In a further particularly preferred embodiment of the invention in the inventive alkoxylates according to formula (I) X is ethoxy, T is H, R3 is $O(Z)_mH$, Z is ethoxy, n + m, on a molar average, is a number of from 5 to 35, two of the substituents R4, R5, R6 and R7 are H and the other two of these substituents are $C_6H_5CHCH_3$, and preferably, n and m, on a molar average and independently of one another, are numbers of from 2 to 20.

In a further particularly preferred embodiment of the invention in the inventive alkoxylates according to formula (I) X is ethoxy, T is H, R4 is $O(Z)_mH$, Z is ethoxy, n + m, on a molar average, is a number of from 5 to 35, two of the substituents R3, R5, R6 and R7 are H and the other two of these substituents are $C_6H_5CHCH_3$, and preferably, n and m, on a molar average and independently of one another, are numbers of from 2 to 20.

In a further particularly preferred embodiment of the invention in the inventive alkoxylates according to formula (I) X is ethoxy, T is H, R5 is $O(Z)_mH$, Z is ethoxy, n + m, on a molar average, is a number of from 5 to 35, two of the substituents R3, R4, R6 and R7 are H and the other two of these substituents are $C_6H_5CHCH_3$, and preferably, n and m, on a molar average and independently of one another, are numbers of from 2 to 20.

In a further particularly preferred embodiment of the invention in the inventive alkoxylates according to formula (I) X is ethoxy, T is H, n, on a molar average, is a number of from 5 to 35, R3 is $OCH_3$, two of the substituents R4, R5, R6 and R7 are H and the other two of these substituents are $C_6H_5CHCH_3$.

In a further particularly preferred embodiment of the invention in the inventive alkoxylates according to formula (I) X is ethoxy, T is H, n, on a molar average, is a number of from 5 to 35, R4 is $OCH_3$, two of the substituents R3, R5, R6 and R7 are H and the other two of these substituents are $C_6H_5CHCH_3$.

In a further particularly preferred embodiment of the invention in the inventive alkoxylates according to formula (I) X is ethoxy, T is H, n, on a molar average, is a number of from 5 to 35, R5 is $OCH_3$, two of the substituents R3, R4, R6 and R7 are H and the other two of these substituents are $C_6H_5CHCH_3$.

In an extraordinarily preferred embodiment of the invention in the inventive alkoxylates according to formula (I) X is ethoxy, T is H, n, on a molar average, is a number of from 5 to 35, R3 and R7 are $C_6H_5CHCH_3$, R4 and R6 are H and R5 is $OCH_3$.

In one preferred embodiment of the invention the inventive alkoxylates such as those according to formula (I) are single compounds.

In another preferred embodiment of the invention the inventive alkoxylates such as those according to formula (I) are mixtures of two or more compounds.

Among the single inventive alkoxylates such as those according to formula (I) and the mixtures of two or more inventive alkoxylates such as those according to formula (I) the mixtures are preferred.

Further preferred embodiments of the invention result from the combination of two or more of the preferred, more preferred, even more preferred, particularly preferred and extraordinarily preferred embodiments of the invention.

The examples below are intended to illustrate the invention in detail without, however, limiting it thereto.

## Examples

The degree of alkoxylation of the inventive alkoxylates may be checked using NMR spectroscopy. The degree of ethoxylation of described examples was checked using $^1$H-NMR spectroscopy in analogy to the method described in R. Stevanova, D. Rankoff, S. Panayotova, S.L. Spassov, J. Am. Oil Chem. Soc. 65, 1516-1518 (1988). For this purpose, the samples are derivatised by reacting them with trichloro acetyl isocyanate and measured as solutions in deuterated chloroform containing 1 weight-% (1 wt.-%) of tetramethyl silane as internal standard.

GC-MS spectra were recorded using an Agilent Technologies HP6890 gas chromatograph coupled with an HP 5973 series mass selective detector. Samples were separated on a 15 m x 0.25 mm, 0.1 mm film DB-1 UI column. The column temperature was initially held at 40 °C for 2 minutes, then the temperature was raised to 320 °C at a rate of 10 °C per minute and held for 10 minutes. The injector temperature was maintained at 260 °C, and the injection volume was 1.0 μL in the split mode. Helium was used as a carrier gas at a pressure of 20 kPa. Mass spectra were scanned from m/z 40-800. The ionization method was EI+. All samples were dissolved in organic solvents and filtrated before injection into the GC-system.

The analysis of the reaction mixture was performed by identifying the species by GC-MS and quantification of the peaks by GC FID. The quantification for these compounds is given in GC area percent.

Gas chromatography was performed using a Hewlett Packard GC 6890 with autosampler, coupled with a flame-ionisation detector (fid). Samples were separated on a 15 m x 0.32 mm, 0.25 μm film DB-5 column. The column temperature was initially held at 40 °C for 2 minutes, then the temperature was raised to 350 °C at a rate of 25 °C per minute and held for 5 minutes. The injector temperature was maintained at 250 °C, the detector temperature was maintained at 330 °C and the injection volume was 1.0 μL in the split mode. Helium was used as a carrier gas with a constant pressure of 0.5 bar. The samples were prepared by diluting 10 mg of sample with 1.5 ml of dichloromethane.

### Example 1 - Reaction of resorcinol with 3 equivalents of styrene

In a 500 ml 3 necked round bottom flask, 110.1 g (1.0 mol) resorcinol and 1.0 g (5.46 mmol) para-toluenesulfonic acid were heated to 120 °C with stirring under nitrogen atmosphere. At 120 °C, 312.5 g (3.0 mol) styrene were added dropwise over 1.5 hours. After the addition was completed, the reaction mixture was stirred for 6 hours at 130 °C. After cooling down to room temperature, 365.8 g of an orange red solid were obtained.
The composition of the obtained mixture was analyzed by GC-MS and GC. It contained 0.8 % distyrenated resorcinol, 93.7 % tristyrenated resorcinol and 1.6 % tetrastyrenated resorcinol (percentages given are GC area percent).

### Example 2 - Reaction of resorcinol with 2 equivalents of styrene

In a 500 ml 3 necked round bottom flask, 137.6 g (1.25 mol) resorcinol and 1.3 g (6.88 mmol) para-toluenesulfonic acid were heated to 120 °C with stirring under nitrogen atmosphere. At 120 °C, 260.4 g (2.5 mol) styrene were added dropwise over 1.5 hours. After the addition was completed, the reaction mixture was stirred for 6 hours at 130 °C. After cooling down to room temperature, 379.0 g of a dark red solid were obtained.
The composition of the obtained mixture was analyzed by GC-MS and GC. It contained 9.1 % monostyrenated resorcinol, 63.6 % distyrenated resorcinol and 25.1 % tristyrenated resorcinol (percentages given are GC area percent).

### Example 3 - Reaction of 4-methoxyphenol with 2 equivalents of styrene

In a 500 ml 3 necked round bottom flask, 155.2 g (1.25 mol) 4-methoxyphenol and 1.3 g (6.88 mmol) para-toluenesulfonic acid were heated to 120 °C with stirring under nitrogen atmosphere. At 120 °C, 260.4 g (2.5 mol) styrene were added dropwise over 1.5 hours. After the addition was completed, the reaction mixture was stirred for 2.5 hours at 130 °C. After cooling down to room temperature, 407.3 g of a dark orange solid were obtained.
The composition of the obtained mixture was analyzed by GC-MS and GC. It contained 5.0 % monostyrenated 4-methoxyphenol, 88.0 % distyrenated 4-methoxyphenol and 5.1 % tristyrenated 4-methoxyphenol (percentages given are GC area percent).

### Example 4 - Reaction of catechol with 2 equivalents of styrene

In a 500 ml 3 necked round bottom flask, 137.6 g (1.25 mol) catechol and 1.3 g (6.88 mmol) para-toluenesulfonic acid were heated to 120 °C with stirring under nitrogen atmosphere. At 120 °C, 260.4 g (2.5 mol) styrene were added dropwise over 1.5 hours. After the addition was completed, the reaction mixture was stirred for 1.5 hours at 130 °C. After cooling down to room temperature, 375.6 g of a brown-red solid were obtained.
The composition of the obtained mixture was analyzed by GC-MS and GC. It contained 4.9 % monostyrenated catechol,

88.3 % distyrenated catechol and 4.1 % tristyrenated catechol (percentages given are GC area percent).

General procedure for the ethoxylation of styrenated derivatives of hydroxy or alkoxy phenols:

The styrenated phenol was filled into a dry and clean lab autoclave. Sodium methoxide solution in methanol was added under stirring and then the autoclave was purged with nitrogen. After a successful pressure test, the pressure in the autoclave was again reduced to atmospheric pressure. Then full vacuum was applied and the reaction mixture was heated up to 100 °C for removal of methanol. This drying was continued for 2 hours at 100 °C. After that, the vacuum was compensated with nitrogen. The reaction mixture was heated to 160 °C. At this temperature a safe amount of ethylene oxide (EO) was added and the pressure observed until the reaction started (pressure decreased). In the following 7 to 20 hours the rest of ethylene oxide was added at 160°C (4-5 bar) and stirring was continued for one to two hours to complete the reaction. Then the reaction mixture was cooled down to 100 °C and vacuum was applied for 30 minutes to remove residual ethylene oxide. After that, the vacuum was compensated with nitrogen, the reaction mixture cooled down to 80 °C and filled into a flask.

Example 5 - ethoxylation of the product of example 1 with 10 equivalents of EO

202.7 g of the product of example 1 and 1.3 g of sodium methoxide solution (30 wt.-% in methanol) were reacted with 203.7 g of ethylene oxide (10 mol EO/mol) as described in the general procedure for the ethoxylation of styrenated derivatives of hydroxy or alkoxy phenols. 155.9 g of the product (brown oil) were discharged out of the reactor.

Example 6 - ethoxylation of the product of example 1 with 20 equivalents of EO

The remaining product of example 5 (250.7 g, calculated) was reacted with additional 125.7 g of ethylene oxide (10 mol EO/mol) as described in the general procedure for the ethoxylation of styrenated derivatives of hydroxy or alkoxy phenols. 182.2 g of the product (brown oil) were discharged out of the reactor.

Example 7 - ethoxylation of the product of example 1 with 30 equivalents of EO

The remaining product of example 6 (194.2 g, calculated) was reacted with additional 64.9 g of ethylene oxide (10 mol EO/mol) as described in the general procedure for the ethoxylation of styrenated derivatives of hydroxy or alkoxy phenols. 259.1 g of the product (brown oil) were obtained.

Example 8 - ethoxylation of the product of example 4 with 10 equivalents of EO

206.6 g of the product of example 4 and 1.7 g of sodium methoxide solution (30 wt.-% in methanol) were reacted with 280.3 g of ethylene oxide (10 mol EO/mol) as described in the general procedure for the ethoxylation of styrenated derivatives of hydroxy or alkoxy phenols. 212.0 g of the product (brown oil) were discharged out of the reactor.

Example 9 - ethoxylation of the product of example 4 with 20 equivalents of EO

The remaining product of example 8 (274.9 g, calculated) was reacted with additional 158.3 g of ethylene oxide (10 mol EO/mol) as described in the general procedure for the ethoxylation of styrenated derivatives of hydroxy or alkoxy phenols. 198.2 g of the product (brown oil) were discharged out of the reactor.

Example 10 - ethoxylation of the product of example 4 with 30 equivalents of EO

The remaining product of example 9 (235.0 g, calculated) was reacted with additional 85.9 g of ethylene oxide (10 mol EO/mol) as described in the general procedure for the ethoxylation of styrenated derivatives of hydroxy or alkoxy phenols. 320.9 g of the product (brown oil) were obtained.

Example 11 - ethoxylation of the product of example 2 with 10 equivalents of EO

192.3 g of the product of example 2 and 1.5 g of sodium methoxide solution (30 wt.-% in methanol) were reacted with 248.3 g of ethylene oxide (10 mol EO/mol) as described in the general procedure for the ethoxylation of styrenated derivatives of hydroxy or alkoxy phenols. 175.4 g of the product (brown oil) were discharged out of the reactor.

Example 12 - ethoxylation of the product of example 2 with 20 equivalents of EO

The remaining product of example 11 (265.2 g, calculated) was reacted with additional 149.4 g of ethylene oxide (10 mol EO/mol) as described in the general procedure for the ethoxylation of styrenated derivatives of hydroxy or alkoxy phenols. 179.1 g of the product (brown oil) were discharged out of the reactor.

Example 13 - ethoxylation of the product of example 2 with 30 equivalents of EO

The remaining product of example 12 (235.5 g, calculated) was reacted with additional 84.9 g of ethylene oxide (10 mol EO/mol) as described in the general procedure for the ethoxylation of styrenated derivatives of hydroxy or alkoxy phenols. 320.4 g of the product (brown oil) were obtained.

Example 14 - ethoxylation of the product of example 3 with 10 equivalents of EO

208.5 g of the product of example 3 and 1.7 g of sodium methoxide solution (30 wt.-% in methanol) were reacted with 272.3 g of ethylene oxide (10 mol EO/mol) as described in the general procedure for the ethoxylation of styrenated derivatives of hydroxy or alkoxy phenols. 127.8 g of the product (brown oil) were discharged out of the reactor.

Example 15 - ethoxylation of the product of example 3 with 20 equivalents of EO

The remaining product of example 14 (353.0 g, calculated) was reacted with additional 199.9 g of ethylene oxide (10 mol EO/mol) as described in the general procedure for the ethoxylation of styrenated derivatives of hydroxy or alkoxy phenols. 410.0 g of the product (brown oil) were discharged out of the reactor.

Example 16 - ethoxylation of the product of example 3 with 30 equivalents of EO

The remaining product of example 15 (142.9 g, calculated) was reacted with additional 51.7 g of ethylene oxide (10 mol EO/mol) as described in the general procedure for the ethoxylation of styrenated derivatives of hydroxy or alkoxy phenols. 194.6 g of the product (brown oil) were obtained.

An aqueous liquid laundry detergent of the following formulation was prepared:

Table 1: Liquid laundry detergent formulation

| Ingredient | weight-% |
|---|---|
| Mono propylene glycol | 2.2 |
| Triethylamine | 1.5 |
| $C_{12}$-$C_{15}$ alcohol ethoxylate with 7 moles of ethylene oxide | 1.2 |
| Linear alkyl benzene sulfonate | 4.6 |
| Sodium laureth ether sulphate with 1 mole of ethylene oxide | 5.8 |
| Citric acid | 2.0 |
| $CaCl_2$ dihydrate | 0.2 |
| NaCl | 0.2 |
| Tinopal® CBS-X (fluorescer BASF) | 0.3 |
| Sodium Hydroxide | to pH = 8.4 |
| ASP dispersant | see text |
| Water | balance |
| ASP: alkoxylated and styrenated phenol derivative | |

Application Example 1 - Anti-Redeposition Benefit

The formulation was used to wash eight 5x5cm knitted cotton cloth pieces in a tergotometer set at 200 rpm (revolutions per minute). A one hour wash was conducted in 800ml of 26° French Hard water at 20 °C, with 2.3 g/l of

the formulation. To simulate soil that could redeposit, 0.04 g/l of 100 % compressed carbon black (ex Alfa Aesar) was added to the wash liquor. To simulate oily sebaceous soil 7.2 g of an SBL2004 soil strip (ex Warwick Equest) was added to the wash liquor.

Once the wash had been completed the cotton swatches were rinsed once in 400 ml clean water, removed, dried and the colour measured on a reflectometer and expressed as the CIE L*a*b* values. The anti-redeposition benefit was expressed as the ΔL value:

$$\Delta L = L(\text{dispersant}) - L(\text{control})$$

The larger the ΔL value the greater the prevention of deposition of the carbon black soil. 95 % confidence limits based on the 8 separate cotton swatches were calculated. Formulations were made with and without the addition of 8.7 wt.-% of the dispersant of Table 2. The results are given in Table 2.

Table 2: Anti-redeposition benefit

| Example | ΔL | 95 % |
|---|---|---|
| 11 | 5.85 | 0.48 |
| 14 | 4.40 | 0.44 |
| 15 | 2.29 | 0.45 |
| 16 | 4.04 | 0.43 |

The dispersants enhance anti-redeposition.

Application Example 2 - Stain Removal Benefit

The formulations of Table 1 including exemplary dispersants of Table 2 were used to wash eight 5x5 cm EMPA 117 stain swatches (blood/milk/ink stain on polycotton) in a tergotometer set at 200 rpm. A 60 minute wash was conducted in 800 ml of 26° French Hard water at 20 °C, with 2.3 g/l of the formulation. To simulate oily sebaceous soil 7.2 g of an SBL2004 soil strip (ex Warwick Equest) was added to the wash liquor.

Once the wash had been completed the cotton swatches were rinsed once in 400 ml clean water, removed dried and the colour measured on a reflectometer and expressed as the CIE L*a*b* values.

The cleaning benefit was expressed as the ΔL value:

$$\Delta L = L(\text{dispersant}) - L(\text{control})$$

The larger the ΔL value the greater the prevention of deposition of the carbon black soil. 95 % confidence limits based on the 8 separate cotton swatches were calculated. Formulations were made with and without the addition of 8.7 wt.-% of the dispersant of Table 3. The results are given in Table 3.

Table 3: Stain removal benefit

| Example | ΔL | 95% |
|---|---|---|
| 14 | 0.49 | 0.43 |
| 15 | 1.45 | 0.26 |
| 16 | 0.96 | 0.32 |

The dispersants enhance stain removal.

## Claims

**1.** Alkoxylate obtainable by

(i) in a first step reacting

a) one or more compounds selected from the group consisting of phenols that are substituted with one substituent, wherein the one substituent is in the ortho-, meta- or para-position to the OH group of the phenol and is selected from the group consisting of OH, R8, OR8, F, Cl, Br, I, CN, $NO_2$ or COOR9, wherein R8 is a linear or branched alkyl group with 1 to 4 C-atoms and R9 is a linear or branched alkyl group comprising 1 to 22 C-atoms or a linear or branched mono- or polyunsaturated alkenyl group comprising 2 to 22 C-atoms, preferably R9 is a linear or branched alkyl group comprising 1 to 18 C-atoms or a linear or branched mono- or polyunsaturated alkenyl group comprising 2 to 18 C-atoms and more preferably R9 is a linear or branched alkyl group comprising 1 to 4 carbon atoms, and preferably the one substituent is selected from the group consisting of OH, $CH_3$, $C_2H_5$, $OCH_3$, $OC_2H_5$, Cl, CN, $NO_2$ or COOR9, more preferably is selected from the group consisting of OH, $CH_3$, $OCH_3$, Cl, CN and COOR9, even more preferably is selected from the group consisting of OH, $CH_3$, $OCH_3$ and COOR9, particularly preferably is OH or $OCH_3$ and extraordinarily preferably is $OCH_3$, with
b) an aryl-substituted linear or branched $C_1$-$C_3$ alkyl alcohol or an aryl-substituted linear or branched $C_2$- or $C_3$-alkene, preferably an aryl-substituted linear or branched $C_2$- or $C_3$-alkene, more preferably styrene or alpha-methylstyrene and even more preferably styrene, and

(ii) in a second step alkoxylating the reaction product of the first step and
(iii) in an optional third step reacting the reaction product of step (ii) with an alkylating agent providing a $C_1$-$C_4$ alkyl group, with a carboxymethylating agent, with a sulfating agent, with a phosphating agent or with a sulfosuccinating agent.

**2.** Alkoxylate according to claim 1, **characterised in that** the molar ratio of the aryl-substituted linear or branched $C_1$-$C_3$ alkyl alcohols or the aryl-substituted linear or branched $C_2$- or $C_3$-alkenes mentioned under b) of the first step, preferably the aryl-substituted linear or branched $C_2$- or $C_3$-alkenes, more preferably styrene or alpha-methylstyrene and even more preferably styrene, to the one or more compounds selected from the group consisting of the substituted phenols mentioned under a) of the first step is of from 1 : 1 to 3 : 1, preferably of from 2 : 1 to 3 : 1 and more preferably is 2 : 1.

**3.** Alkoxylate according to claim 1 or 2, **characterised in that** the molar ratio of alkoxylation agent to the one or more compounds selected from the group consisting of the substituted phenols mentioned under a) of the first step is of from 5 : 1 to 100 : 1, preferably of from 7 : 1 to 80 : 1, more preferably of from 8 : 1 to 70 : 1, even more preferably of from 9 : 1 to 60 : 1 and particularly preferably of from 10 : 1 to 35 : 1.

**4.** Alkoxylate according to one or more of claims 1 to 3, **characterised in that** the one or more compounds selected from the group consisting of the substituted phenols mentioned under a) of the first step are selected from the group consisting of ortho-dihydroxybenzene, meta-dihydroxybenzene, para-dihydroxybenzene, ortho-methoxyphenol, meta-methoxyphenol and para-methoxyphenol, preferably are selected from the group consisting of ortho-methoxyphenol and para-methoxyphenol and more preferably the compound is para-methoxyphenol.

**5.** Alkoxylate according to one or more of claims 1 to 4, **characterised in that** the alkoxylation of the second step is a reaction with ethylene oxide or with ethylene oxide and propylene oxide, in this case preferably with more ethylene oxide than propylene oxide and in this case furthermore preferably either simultaneously or successively, and more preferably the alkoxylation of the second step is a reaction with only ethylene oxide.

**6.** Alkoxylate according to one or more of claims 1 to 5, **characterized in that** it is obtainable by

(i) in a first step reacting

a) one or more compounds selected from the group consisting of ortho-dihydroxybenzene, meta-dihydroxybenzene, para-dihydroxybenzene, ortho-methoxyphenol, meta-methoxyphenol and para-methoxyphenol, preferably selected from the group consisting of ortho-methoxyphenol and para-methoxyphenol and more preferably para-methoxyphenol, with
b) styrene and

(ii) in a second step alkoxylating the reaction product of the first step, preferably reacting the reaction product of the first step with ethylene oxide or with ethylene oxide and propylene oxide, in this case preferably with more

ethylene oxide than propylene oxide and in this case furthermore preferably either simultaneously or successively, and more preferably the alkoxylation of the second step is a reaction with only ethylene oxide.

**7.** Alkoxylate according to the following formula (I)

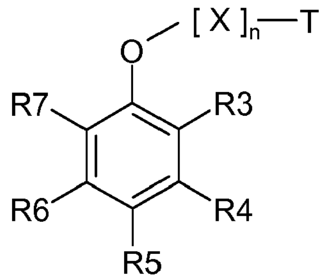

(I)

wherein

X is selected from ethoxy and mixtures of ethoxy and propoxy groups, preferably is selected from ethoxy and mixtures of ethoxy and propoxy groups where the number of ethoxy groups in the mixtures is greater than the number of propoxy groups and more preferably X is ethoxy,
T is selected from the group consisting of H, $C_1$-$C_4$ alkyl, $SO_3^-$, $CH_2$-$COO^-$, sulfosuccinate and $PO_3^{2-}$, preferably is selected from the group consisting of H and $CH_3$ and more preferably is H,
R3-R7 are independently of one another H, Y, aryl, aryl-substituted linear or branched $C_1$ to $C_3$ alkyl or $O(Z)_mT_1$, preferably H, Y, aryl-substituted linear or branched $C_1$ to $C_3$ alkyl or $O(Z)_mT_1$, the aryl-substituted linear or branched $C_1$ to $C_3$ alkyl preferably is selected from the group consisting of $C_6H_5CHCH_3$ and $C_6H_5C(CH_3)_2$ and more preferably the aryl-substituted linear or branched $C_1$ to $C_3$ alkyl is $C_6H_5CHCH_3$,
Y is R8, OR8, F, Cl, Br, I, CN, $NO_2$ or COOR9, wherein R8 is a linear or branched alkyl group with 1 to 4 C-atoms and R9 is a linear or branched alkyl group comprising 1 to 22 C-atoms or a linear or branched mono-or polyunsaturated alkenyl group comprising 2 to 22 C-atoms, preferably R9 is a linear or branched alkyl group comprising 1 to 18 C-atoms or a linear or branched mono- or polyunsaturated alkenyl group comprising 2 to 18 C-atoms and more preferably R9 is a linear or branched alkyl group comprising 1 to 4 carbon atoms, and preferably Y is $CH_3$, $C_2H_5$, $OCH_3$, $OC_2H_5$, Cl, CN, $NO_2$ or COOR9, more preferably $CH_3$, $OCH_3$, Cl, CN or COOR9, even more preferably $CH_3$, $OCH_3$ or COOR9 and particularly preferably $OCH_3$,
Z is selected from ethoxy and mixtures of ethoxy and propoxy groups, preferably ethoxy and mixtures of ethoxy and propoxy groups where the number of ethoxy groups in the mixtures is greater than the number of propoxy groups and more preferably Z is ethoxy,
$T_1$ is selected from the group consisting of H, $C_1$-$C_4$ alkyl, $SO_3^-$, $CH_2$-$COO^-$, sulfosuccinate and $PO_3^{2-}$, preferably is selected from the group consisting of H and $CH_3$ and more preferably is H,
n + m on a molar average, is a number of from 5 to 100, preferably of from 7 to 80, more preferably of from 8 to 70, even more preferably of from 9 to 60 and particularly preferably of from 10 to 35,

**characterised in that** exactly one of the substituents R3-R7 is $O(Z)_mT_1$ or Y, preferably Y, and one to three, preferably two or three of the other substituents R3-R7 are aryl or aryl-substituted linear or branched $C_1$ to $C_3$ alkyl, preferably aryl-substituted linear or branched $C_1$ to $C_3$ alkyl, more preferably selected from the group consisting of $C_6H_5CHCH_3$ and $C_6H_5C(CH_3)_2$ and even more preferably $C_6H_5CHCH_3$.

**8.** Alkoxylate according to claim 7, **characterized in that**

X is selected from ethoxy and mixtures of ethoxy and propoxy groups, preferably is selected from ethoxy and mixtures of ethoxy and propoxy groups where the number of ethoxy groups in the mixtures is greater than the number of propoxy groups and more preferably X is ethoxy,
T is H,
R3-R7 are independently of one another H, $OCH_3$, $C_6H_5CHCH_3$ or $O(Z)_mH$,
Z is selected from ethoxy and mixtures of ethoxy and propoxy groups, preferably ethoxy and mixtures of ethoxy and propoxy groups where the number of ethoxy groups in the mixtures is greater than the number of propoxy groups and more preferably Z is ethoxy,
n + m on a molar average, is a number of from 5 to 100, preferably of from 7 to 80, more preferably of from 8 to 70, even more preferably of from 9 to 60 and particularly preferably of from 10 to 35,

and that exactly one of the substituents R3-R7 is $O(Z)_mH$ or $OCH_3$, preferably $OCH_3$, and one to three of the other substituents R3-R7 are $C_6H_5CHCH_3$ and preferably two or three of the other substituents R3-R7 are $C_6H_5CHCH_3$.

**9.** Alkoxylate according to claim 7 or 8, **characterized in that** n + m, on a molar average, is a number of from 5 to 100, preferably of from 7 to 80, more preferably of from 8 to 70, even more preferably of from 9 to 60 and particularly preferably of from 10 to 35 and n and m, on a molar average and independently of one another, are numbers of from 0 to 100, preferably of from 0 to 80, more preferably of from 0 to 70, even more preferably of from 0 to 60 and particularly preferably of from 0 to 35.

**10.** Alkoxylate according to one or more of claims 7 to 9, **characterized in that** one of the substituents R3-R7 is Y, preferably $OCH_3$, and n, on a molar average, is a number of from 5 to 100, preferably of from 7 to 80, more preferably of from 8 to 70, even more preferably of from 9 to 60 and particularly preferably of from 10 to 35.

**11.** Alkoxylate according to one or more of claims 7 to 9, **characterized in that** one of the substituents R3-R7 is $O(Z)_mT_1$, preferably $O(Z)_mH$, and n and m, on a molar average and independently of one another, are numbers of from 1 to 75, more preferably of from 2 to 60, even more preferably of from 3 to 50, particularly preferably of from 4 to 40 and extraordinarily preferably of from 5 to 25.

**12.** Alkoxylate according to one or more of claims 7 to 11, **characterized in that** two of the substituents R3-R7 are aryl or aryl-substituted linear or branched $C_1$ to $C_3$ alkyl, preferably aryl-substituted linear or branched $C_1$ to $C_3$ alkyl, more preferably selected from the group consisting of $C_6H_5CHCH_3$ and $C_6H_5C(CH_3)_2$ and even more preferably $C_6H_5CHCH_3$, and preferably, these two substituents are in the ortho-positions to the group $O-[X]_n-T$.

**13.** Alkoxylate according to one or more of claims 7 to 9, 11 and 12, **characterized in that** X is ethoxy, T is H, R3 is $O(Z)_mH$, Z is ethoxy, n + m, on a molar average, is a number of from 5 to 35, two of the substituents R4, R5, R6 and R7 are H and the other two of these substituents are $C_6H_5CHCH_3$, and preferably, n and m, on a molar average and independently of one another, are numbers of from 2 to 20.

**14.** Alkoxylate according to one or more of claims 7 to 9, 11 and 12, **characterized in that** X is ethoxy, T is H, R4 is $O(Z)_mH$, Z is ethoxy, n + m, on a molar average, is a number of from 5 to 35, two of the substituents R3, R5, R6 and R7 are H and the other two of these substituents are $C_6H_5CHCH_3$, and preferably, n and m, on a molar average and independently of one another, are numbers of from 2 to 20.

**15.** Alkoxylate according to one or more of claims 7 to 9, 11 and 12, **characterized in that** X is ethoxy, T is H, R5 is $O(Z)_mH$, Z is ethoxy, n + m, on a molar average, is a number of from 5 to 35, two of the substituents R3, R4, R6 and R7 are H and the other two of these substituents are $C_6H_5CHCH_3$ and preferably, n and m, on a molar average and independently of one another, are numbers of from 2 to 20.

**16.** Alkoxylate according to one or more of claims 7 to 10 and 12, **characterized in that** X is ethoxy, T is H, n, on a molar average, is a number of from 5 to 35, R3 is $OCH_3$, two of the substituents R4 to R7 are H and the other two of these substituents are $C_6H_5CHCH_3$.

**17.** Alkoxylate according to one or more of claims 7 to 10 and 12, **characterized in that** X is ethoxy, T is H, n, on a molar average, is a number of from 5 to 35, R5 is $OCH_3$, two of the substituents R3, R4, R6 and R7 are H and the other two of these substituents are $C_6H_5CHCH_3$.

**18.** Alkoxylate according to claim 17, **characterized in that** X is ethoxy, T is H, n, on a molar average, is a number of from 5 to 35, R3 and R7 are $C_6H_5CHCH_3$, R4 and R6 are H and R5 is $OCH_3$.

**19.** Alkoxylate according to one or more of claims 1 to 18, **characterised in that** it is a mixture of two or more compounds.

Europäisches Patentamt
European Patent Office
Office européen des brevets

# EUROPEAN SEARCH REPORT

Application Number
EP 16 15 6197

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 854 952 A (BAYER AG) 23 November 1960 (1960-11-23) * claims 1,2 * * example 6 * | 1-19 | INV. C08G65/26 C11D3/37 C08G65/332 C08G65/334 C08G65/335 C08G65/337 |
| X | US 4 564 632 A (NONN KONRAD [DE] ET AL) 14 January 1986 (1986-01-14) * claim 1; example 1 * * column 1, line 37 - line 38 * | 1-19 | |
| X | US 5 855 662 A (BRAND ACHIM [DE] ET AL) 5 January 1999 (1999-01-05) * claim 8 * | 1-19 | |
| X | US 6 596 073 B1 (NYSSEN PETER ROGER [DE] ET AL) 22 July 2003 (2003-07-22) * claim 10 * * column 3, line 4 - line 35 * | 1-19 | |
| A | US 4 127 550 A (CHURCHILL CHARLES M ET AL) 28 November 1978 (1978-11-28) * column 5 - column 8 * | 1-19 | TECHNICAL FIELDS SEARCHED (IPC) |
| A | GB 2 007 692 A (RHONE POULENC IND) 23 May 1979 (1979-05-23) * claim 9 * | 1-19 | C08G C11D |

The present search report has been drawn up for all claims

3

| Place of search | Date of completion of the search | Examiner |
|---|---|---|
| The Hague | 3 August 2016 | O'Sullivan, Timothy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT ON EUROPEAN PATENT APPLICATION NO.** EP 16 15 6197

This annex lists the patent family members relating to the patent documents cited in the above-mentioned European search report. The members are as contained in the European Patent Office EDP file on
The European Patent Office is in no way liable for these particulars which are merely given for the purpose of information.

03-08-2016

| Patent document cited in search report | | Publication date | Patent family member(s) | | | Publication date |
|---|---|---|---|---|---|---|
| GB 854952 | A | 23-11-1960 | NONE | | | |
| US 4564632 | A | 14-01-1986 | DE | 3048021 | A1 | 15-07-1982 |
| | | | EP | 0055401 | A1 | 07-07-1982 |
| | | | JP | H0256322 | B2 | 29-11-1990 |
| | | | JP | S57123101 | A | 31-07-1982 |
| | | | US | 4564632 | A | 14-01-1986 |
| US 5855662 | A | 05-01-1999 | DE | 19511624 | A1 | 02-10-1996 |
| | | | EP | 0735109 | A2 | 02-10-1996 |
| | | | US | 5855662 | A | 05-01-1999 |
| US 6596073 | B1 | 22-07-2003 | AU | 2545200 | A | 29-08-2000 |
| | | | CZ | 20012879 | A3 | 17-10-2001 |
| | | | DE | 10080291 | D2 | 24-01-2002 |
| | | | DE | 19905269 | A1 | 10-08-2000 |
| | | | GB | 2363127 | A | 12-12-2001 |
| | | | US | 6596073 | B1 | 22-07-2003 |
| | | | WO | 0047681 | A1 | 17-08-2000 |
| US 4127550 | A | 28-11-1978 | NONE | | | |
| GB 2007692 | A | 23-05-1979 | AT | 383365 | B | 25-06-1987 |
| | | | BE | 871715 | A1 | 30-04-1979 |
| | | | CH | 640565 | A5 | 13-01-1984 |
| | | | DE | 2846984 | A1 | 10-05-1979 |
| | | | DK | 490478 | A | 03-05-1979 |
| | | | ES | 474737 | A1 | 16-05-1980 |
| | | | FR | 2407980 | A1 | 01-06-1979 |
| | | | GB | 2007692 | A | 23-05-1979 |
| | | | IT | 1109304 | B | 16-12-1985 |
| | | | NL | 7810881 | A | 04-05-1979 |
| | | | SE | 439926 | B | 08-07-1985 |
| | | | US | 4240918 | A | 23-12-1980 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4240918 E
- WO 2008138486 A1
- US 20080255204 A1
- WO 9940784 A1
- US 20030196685 A1


### Non-patent literature cited in the description


- **R. STEVANOVA ; D. RANKOFF ; S. PANAYOTOVA ; S.L. SPASSOV.** *J. Am. Oil Chem. Soc.,* 1988, vol. 65, 1516-1518